# EUROPÄISCHE PATENTSCHRIFT

(11) **EP 3 096 472 B1**
(45) Veröffentlichungstag und Bekanntmachung des Hinweises auf die Patenterteilung: **05.02.2020**
(21) Anmeldenummer: 16170669.2
(22) Anmeldetag: 20.05.2016
(51) Int. Cl.: H04B 10/50, H04B 10/572, H04B 10/00

(54) **VERFAHREN UND SYSTEM ZUR OPTISCHEN DATENÜBERTRAGUNG**
METHOD AND SYSTEM FOR OPTICAL DATA TRANSMISSION
PROCÉDÉ ET SYSTÈME DE TRANSMISSION DE DONNÉES OPTIQUE

(30) Priorität: 21.05.2015 DE 102015108101
(43) Veröffentlichungstag der Anmeldung: 23.11.2016
(73) Patentinhaber: Deutsche Telekom AG, 53113 Bonn (DE)
(72) Erfinder: WISSEL, Felix, 64372 Ober-Ramstadt (DE); WEIERSHAUSEN, Werner, 64859 Eppertshausen (DE)
(74) Vertreter: Brandt & Nern Patentanwälte

(56) Entgegenhaltungen:
- EP-A1- 2 768 163
- WO-A1-2005/125060
- US-A1- 2005 276 606
- US-A1- 2012 207 479

## Beschreibung

Die Erfindung betrifft eine Lösung zur Datenübertragung in einem optischen Netzwerk, in welchem Daten zwischen einer Mehrzahl von optischen Sendern und Empfängern unter Nutzung eines Wellenlängenmultiplexverfahrens über zumindest teilweise gemeinsam genutzte Lichtwellenleiter respektive Glasfasern in voneinander verschiedenen optischen Kanäle übertragen werden. Sie bezieht sich insbesondere auf die Erhöhung des Datendurchsatzes in einem gleichzeitig mit verschiedenen optischen Kanälen genutzten Lichtwellenleiter im Hinblick auf eine möglichst breitbandige Datenübertragung. Gegenstände der Erfindung sind hierbei ein entsprechendes Verfahren und ein zur Durchführung dieses Verfahrens ausgebildetes System für die optische Datenübertragung.

Das optische Multiplexing (Wellenlängenmultiplexverfahren) erlaubt eine effiziente Ausnutzung der Glasfasern beziehungsweise Lichtwellenleiter eines optischen Netzwerks. Dabei ist es möglich, einen einzelnen Lichtwellenleiter zumindest abschnittsweise gleichzeitig zur Datenübertragung zwischen einer Mehrzahl von optischen Sendern und optischen Empfängern zu nutzen. Hierzu werden die von den einzelnen Sendern ausgesendeten Daten innerhalb des Lichtwellenleiters in unterschiedlichen Frequenzkanälen, das heißt unter Nutzung von hinsichtlich ihrer Wellenlänge verschiedenen optischen Trägersignalen, übertragen. Die zu übertragenden Daten, das heißt die Nutzdaten, werden also senderseitig auf Lichtwellen mit bezüglich der einzelnen Sender unterschiedlicher Wellenlänge aufmoduliert. Bei den als Träger dienenden Lichtwellen handelt es sich in der Regel, aber zumindest im Kontext der hier dargestellten Erfindung um Laserstrahlung.

Die Einkopplung der mit den Nutzdaten modulierten Laserstrahlung in einen Lichtwellenleiter des optischen Netzwerks erfolgt senderseitig mit Hilfe so genannter farbiger SFPs, wobei SFP für Small Form-Factor Pluggable steht und optoelektronische Module kompakter Bauform bezeichnet. Im Hinblick auf eine gewünschte Bidirektionalität umfassen derartige Module neben einem als Sender dienenden Laser unter anderem auch einen optischen Empfänger. Auf die von dem als Sender dienenden Laser ausgesendete Trägerschwingung wird das Nutzsignal aufmoduliert und empfängerseitig jeweils an einer Fotodiode oder einem vergleichbaren optischen Empfänger eines SFPs durch Demodulation wieder von dem Trägersignal getrennt. Zwischen den Sendern und den Empfängern sind an den Enden gemeinsam genutzter Lichtwellenleiterabschnitte optische Multiplexer und Demultiplexer beziehungsweise WDM-Filter (WDM = Wavelength Division Multiplexing - Wellenlängenmultiplex) angeordnet.

Im Hinblick auf die gemeinsame Nutzung von Wellenleiterabschnitten durch mehrere Sender und Empfänger sind unterschiedliche WDM-Systeme standardisiert worden. Beim CWDM (C = Coarse - grob) erfolgt die Übertragung in 8 oder 16 Frequenzkanälen mit demnach 8 oder 16 hinsichtlich ihrer Wellenlänge und somit auch hinsichtlich ihrer Frequenz verschiedenen Trägersignalen, wobei für die einzelnen Kanäle jeweils eine Mittenfrequenz (und eine damit korrespondierende Wellenlänge respektive Peakwellenlänge) spezifiziert ist und die einzelnen Kanäle zueinander einen definierten Kanalabstand aufweisen. Ein weiteres WDM-System ist als DWDM (mit D = Dense für dicht) spezifiziert. Hierbei werden üblicherweise 40 bis 80 teilweise aber auch mehr Frequenzkanäle mit einem gegenüber dem CWDM deutlich geringeren Kanalabstand sowie einer jeweils geringeren Kanalbreite mit spezifizierter Mittenfrequenz definiert.

Um die Nutzung der unterschiedlichen Frequenzkanäle zu ermöglichen, müssten eigentlich unterschiedliche SFPs zum Einsatz gelangen, welche sich hinsichtlich der Wellenlänge des von dem verwendeten Sender respektive Laser als Trägersignal ausgesendeten Lichts unterscheiden. Dies würde jedoch im Hinblick auf die Wartung und/oder Reparatur entsprechender optischer Netzwerke bedingen, dass zum Zwecke des Ersatzes eine Vielzahl verschieden spezifizierter farbiger SFPs vorrätig gehalten werden müsste. Allerdings würden hieraus, aufgrund dessen, dass entsprechende SFPs recht teuer sind, sehr hohe Kosten resultieren.

Mit dem Ziel einer Reduzierung der Kosten sind daher Lösungen bekannt geworden, bei welchen man sich des Prinzips des Injection locking beziehungsweise der Modenkopplung bedient. Hierbei werden in den SFPs verhältnismäßig breitbandige Laser eingesetzt, welche Trägersignale in hinsichtlich der Wellenlänge und Frequenz unterschiedlichen, auf das gesamte für die Datenübertragung genutzte Frequenzspektrum verteilten Moden aussenden können. Die betreffenden Laser werden mit Hilfe einer Pumplichtquelle definierter Wellenlänge zur Aussendung einer als Trägersignal dienenden Laserstrahlung innerhalb jeweils eines der für die Übertragung in dem optischen Netzwerk verwendeten Kanäle angeregt. Als Pumplichtquelle wird vorzugsweise ebenfalls ein breitbandiger Laser einer zwischen den der Datenübertragung dienenden Sendern und Empfängern angeordneten optischen Anordnung verwendet, dessen breitbandige Strahlung mit Hilfe geeigneter optischer Elemente, wie beispielsweise einem Ringresonator, in unterschiedliche Wellenlängen zur Anregung der Laser der verschiedenen Sender aufgefächert wird.

Das Injection locking basiert auf dem Prinzip des Injection seeding, wie es beispielsweise in der DE 41 27 407 A1 beschrieben wird. Beim Injection seeding wird ein Laser mit Hilfe eines als Seeder beziehungsweise Seeding-Laser bezeichneten Dauerstrich-Lasers zum Anschwingen mit einer bestimmten Mode und zum Emittieren schmalbandiger Laserstrahlung einer bestimmten Wellenlänge angeregt. Entspricht diese Wellenlänge der Wellenlänge des Seeding-Lasers spricht man von Injection Locking.

Eine das Prinzip des Injection locking nutzende Lösung zur Übertragung von Daten in einem passiven optischen Netzwerk unter Verwendung des Wellenlängenmultiplexverfahrens wird auch in der US 2005/0276606 beschrieben. Gemäß dieser Lösung werden die zur Anregung der Laser in den einzelnen Sendern zur Übertragung der Nutzdaten verwendeten Lichtwellen durch einen mehrere Moden mit zueinander äquidistanten Wellenlängen aussendenden Fabry-Perot-Laser bereitgestellt. Die von dem Fabry-Perot-Laser emittierten Moden werden dabei vor der Übertragung an die mittels ihrer gepumpten Laser der Sender für die Nutzdaten über ein ihre Intensität nivellierendes Flattening Filter und einen der Selbstinjektion des Fabry-Pérot-Laser dienenden optischen Halbleiterverstärker geführt.

Unter www.infinera.com/wp-content/uploads/2015/11/AN_iWDM-PON_B.pdf wird ebenfalls nochmals die Nutzung des Prinzips des Injection locking für die Datenübertragung in passiven optischen Netzwerken (PON) beschrieben.

Die zur Anregung der Laser in den einzelnen Sendern verwendeten Lichtwellen des Pumplasers werden beim Injection locking, wie bereits ausgeführt, vorzugsweise in einem Spektrum mit zueinander äquidistanten Wellenlängen bereitgestellt. Das Raster, also der Abstand zwischen den einzelnen Wellenlängen (Peakwellenlängen) dieses Spektrums, wird so festgelegt, dass für jeden der in Abhängigkeit des verwendeten WDM-Systems (vorzugsweise eines CWDM-Systems) vorgesehenen Frequenzkanal mindestens eine Wellenlänge zur Verfügung steht, welche einen Sender zur Aussendung eines Trägersignals mit einer innerhalb des jeweiligen Frequenzkanals liegenden Mode anregt. Typischerweise ist es jedoch so, dass im Falle eines hinreichend engen Wellenlängenrasters der zur Anregung der Laser dienenden Lichtwellen jeweils mindestens zwei Eigenmoden eines in einem Sender verwendeten Lasers innerhalb des für den betreffenden Sender vorgesehenen Übertragungskanals liegen. Dies hängt damit zusammen, dass der für standardisierte Frequenzkanäle festgelegte Frequenzabstand beziehungsweise Wellenlängenabstand sich üblicherweise von dem für die Moden von Lasern typischen Abstand unterscheidet. So sind in gebräuchlichen Systemen beispielsweise Frequenzkanäle in einem Abstand von 100 GHz zueinander festgelegt, wohingegen die Eigenmoden dabei verwendeter Laser einen Abstand von 46 GHz aufweisen. Welche der Eigenmoden des Lasers eines Senders innerhalb eines Frequenzkanals jeweils angeregt wird, ist hierbei zufällig. Gravierender ist es aber, dass dies insoweit nicht stabil ist, als dass es ebenfalls zufällig zu Fluktuationen zwischen den Eigenmoden des Lasers eines Senders kommt. Der betreffende Laser springt also stochastisch zwischen mindestens zwei Moden hin und her.

Das zuletzt beschriebene Phänomen ist bei den bisher noch vielfach zur Anwendung kommenden Übertragungsraten bis zu 2,5 GBit/s unkritisch. Bei höheren Bandbreiten beziehungsweise Übertragungsraten führt dies aber dazu, dass der Empfänger die Fluktuation zwischen den Moden nicht mehr von dem Nutzsignal unterscheiden kann, mit welchem das Trägersignal des Senders moduliert wird. Insbesondere in optischen Netzwerken mit Übertragungsraten von 10 GBit/s oder mehr ist daher eine sichere Datenübertragung entsprechend dem zuvor beschriebenen Verfahren mit einem breitbandigen Pumplaser als sogenanntes Seeding Light nicht mehr ohne weiteres möglich.

Eine mögliche Alternative könnte es sein, statt des breitbandigen Pumplasers eine Vielzahl schmalbandiger, das heißt monochromer Laser als Seeding Light zu verwenden und jeden in den Sender der SFPs angeordneten Laser mit Hilfe eines dieser schmalbandigen Laser zur Aussendung nur einer ganz bestimmten Mode anzuregen. Allerdings würde hieraus für die optische Anordnung zur Bereitstellung des Seeding Lights mit einem entsprechenden Spektrum unterschiedlicher, sehr dicht beieinander liegender Peakwellenlängen wiederum ein hoher Aufwand resultieren. Insbesondere müssten dabei die verwendeten Pumplaser ihrerseits stabilisiert werden, nämlich im Hinblick auf die Konstanz der Wellenlänge des von ihnen abgestrahlten Pumplichts.

Hinsichtlich einer der Mode eines Lasers entsprechenden Wellenlänge sowie hinsichtlich der Wellenlängen des von der beschriebenen optischen Anordnung zum Pumpen der Laser in den Sendern bereitgestellten Spektrums sei an dieser Stelle folgendes angemerkt. Auch die von einem Laser im Ergebnis der Anregung einer Eigenmode des Lasers emittierte Strahlung besitzt bezüglich ihrer Wellenlänge eine gewisse, wenn auch geringe Breite. Innerhalb dieses infinitesimal kleinen Wellenlängenbereiches einer Mode des Lasers sendet dieser Strahlung mit einer maximalen Leistung aus, weshalb in diesem Zusammenhang von einer Peakwellenlänge gesprochen wird, auch wenn es sich tatsächlich streng genommen um einen Wellenlängenbereich handelt. Soweit nichts anderes ausgeführt, werden daher die Begriffe "Wellenlänge" und "Peakwellenlänge" im Kontext der Ausführungen zur Erfindung und in den Patentansprüchen synonym verwendet.

Aufgabe der Erfindung ist es, ein Verfahren und ein System zur Datenübertragung in einem optischen Netzwerk bereitzustellen, durch welche die zuvor genannten Probleme gelöst werden. Die insoweit anzugebende Lösung soll es insbesondere ermöglichen, in optischen Netzwerken weiterhin universelle, das heißt ohne Veränderungen für verschiedenen Frequenzkanäle einsetzbare SFPs zu verwenden und die darin als Sender angeordneten Laser mit vergleichsweise geringem Aufwand im Wege der Modenkopplung nur bezüglich einer ihrer Eigenmoden anzuregen.

Die Aufgabe wird durch ein Verfahren mit den Merkmalen des Patentanspruchs 1 gelöst. Ein die Aufgabe lösendes System wird durch den ersten Sachanspruch charakterisiert. Vorteilhafte Aus- und Weiterbildungen der Erfindung sind durch die jeweiligen Unteransprüche gegeben.

Bei dem zur Lösung der Aufgabe vorgeschlagenen Verfahren handelt es sich gemäß den vorstehenden Ausführungen und der Aufgabe um ein Verfahren zur optischen Datenübertragung, bei welchem Daten zwischen einer Mehrzahl von optischen Sendern und optischen Empfängern über Lichtwellenleiter und Multiplexer/Demultiplexer in einem optischen Netzwerk unter Nutzung unterschiedlicher Frequenzkanäle übertragen werden. Wie aus dem Stand der Technik bereits bekannt, werden die Sender, welche Laserlicht zur Nutzung als mit den zu übertragenden Daten zu modulierendes Trägersignal aussenden, zur Aussendung von Trägersignalen mit untereinander sowie hinsichtlich ihrer Zuordnung zu den Frequenzkanälen verschiedenen Wellenlängen angeregt. Dies geschieht durch Modenkopplung, also Injection locking, mit Hilfe einer mindestens eine Lichtquelle umfassenden optischen Anordnung, durch welche ein periodisches Spektrum von Lichtwellen mit zueinander äquidistanten Wellenlängen bereitgestellt wird, indem jeder Sender durch eine andere der von der genannten optischen Anordnung bereitgestellten Lichtwellen beziehungsweise Moden gelocked, das heißt zur Aussendung von Laserlicht angeregt wird.

Um das angesprochene Problem eines Hin- und Herspringens des als Sender dienenden Lasers zwischen zwei innerhalb des Frequenzkanals für den Sender gelegenen Moden zu vermeiden, werden Lichtwellen mit ausgewählten Wellenlängen aus dem Spektrum der von der optischen Anordnung bereitgestellten verschiedenen Lichtwellen (Moden) mit zueinander äquidistanten Wellenlängen nicht zur Anregung der Sender verwendet, indem sie mit Hilfe einer Resonatoranordnung aus diesem Spektrum ausgefiltert werden. Beispielsweise geschieht dies, also das Ausfiltern der nicht zur Anregung von Lasern der Sender zu verwendenden Wellenlängen, unter Nutzung des Vernier-Effekts. Ausführungen zum Vernier-Effekt und der Art seiner Nutzung im Rahmen der Erfindung sollen später anhand von Zeichnungen gegeben werden.

Im Ergebnis dessen entsteht aus dem ursprünglichen von der bereits mehrfach erwähnten, entsprechend ausgebildeten optischen Anordnung bereitgestellten Spektrum mit hinsichtlich der Wellenlänge zueinander äquidistanten Lichtwellen ein Spektrum von Lichtwellen, welche hinsichtlich ihrer Wellenlängen weiterhin so nahe beieinander liegen beziehungsweise sich so geringfügig voneinander unterscheiden, dass für jeden für die Datenübertragung vorgesehenen Frequenzkanal eine, jedoch nur eine Lichtwelle beziehungsweise Mode zur Verfügung steht, welche geeignet ist, einen Laser im Wege der Modenkopplung zur Aussendung einer Laserstrahlung als Trägersignal für den entsprechenden Kanal anzuregen. Für jeden der vorzugsweise nach dem DWDM zur Nutzung für die Datenübertragung festgelegten Kanäle (40, 80 oder mehr) wird genau ein Laser, das heißt ein Sender zur Aussendung einer als Trägersignal dienenden Laserstrahlung unter Selektion genau einer Eigenmode angeregt.

Entsprechend einer praxisrelevanten Umsetzung des Verfahrens werden zur Ausfilterung nicht zum Pumpen der Laser von Sendern zu verwendender Wellenlängen die Lichtwellen des durch die optische Anordnung zur Anregung der Sender bereitgestellten Lichtspektrums vor ihrer wellenlängendifferenzierten Übertragung an die einzelnen anzuregenden Sender beziehungsweise an die zu pumpenden Laser durch eine mindestens zwei, sich hinsichtlich ihrer Resonatorlänge und damit hinsichtlich der aus ihnen auskoppelbaren Wellenlängen unterscheidende Resonatoren umfassende Resonatoranordnung geführt. Hierbei werden für die Resonatoranordnung Resonatoren verwendet, deren Resonatorlängen in einem nicht ganzzahligen Verhältnis zueinander stehen, das heißt zueinander paarweise teilerfremd sind. In bevorzugter Ausgestaltung werden hierbei die von der optischen Anordnung bereitgestellten Lichtwellen mittels eines Strahlteilers auf die genannten mindestens zwei Ringresonatoren mit zueinander paarweise teilerfremder Resonatorlänge aufgeteilt. Die aus den mindestens zwei Ringresonatoren ausgekoppelten Lichtwellen werden dann zunächst einem Strahlkoppler und schließlich den jeweils durch sie zur Aussendung eines Trägersignals anzuregenden Sendern zugeführt. Zueinander teilerfremd sind nach diesem Verständnis Resonatorlängen für die es außer der Zahl 1 keinen gemeinsamen Teiler gibt. Paarweise teilerfremd zueinander sind die Resonatorlängen von zwei oder mehr Resonatoren, bei denen jedes beliebige miteinander verglichene Paar einer solchen Gruppe von Resonatoren eine zueinander teilerfremde Resonatorlänge aufweist.

Das zur Lösung und zur Durchführung des zuvor erläuterten Verfahrens vorgeschlagene System zur optischen Datenübertragung besteht zunächst aus einer Mehrzahl von als Laser ausgebildeten optischen Sendern, welche über Lichtwellenleiter und Multiplexer/Demultiplexer in einem optischen Netzwerk mit einer Mehrzahl optischer Empfänger verbunden sind. Bestandteil des Systems ist ferner eine in dem Netzwerk angeordnete, mindestens eine Lichtquelle als Seeding Light umfassende optische Anordnung zur Bereitstellung eines periodischen Lichtwellenspektrums mit hinsichtlich ihrer Wellenlängen zueinander äquidistanten Moden. Von dieser optischen Anordnung bereitgestellte Lichtwellen werden den Sendern zugeführt, um diese zur Aussendung als Trägersignal für die Daten dienenden Laserlichts mit bezüglich der Sender untereinander verschiedenen Wellenlängen anzuregen.

Erfindungsgemäß ist zur Umsetzung des zuvor erläuterten Verfahrens zwischen der das Lichtwellenspektrum von Moden mit zueinander äquidistanten Wellenlängen bereitstellenden optischen Anordnung und den mittels von ihr bereitgestellter Lichtquellen anzuregenden Sendern eine mindestens aus zwei Resonatoren mit voneinander verschiedener Resonatorlänge bestehende Resonatoranordnung angeordnet, wobei die Resonatorlängen ihrer Resonatoren vorzugsweise zueinander paarweise teilerfremd sind.

Vorzugsweise ist das erfindungsgemäße System zudem derart gestaltet, dass die die Lichtwellen zur Anregung der Sender bereitstellende optische Anordnung durch ein breitbandiges Seeding Light, nämlich einem breitbandigen Laser, und durch ein die Laserstrahlung dieses breitbandigen Lasers in eine Mehrzahl von Lichtwellen mit zueinander äquidistanten Wellenlängen auffächerndes optisches Element ausgebildet ist. Dabei wird das letztgenannte optische Element vorzugsweise ebenfalls mittels eines Resonators realisiert.

Sowohl für die Resonatoranordnung zur Ausfilterung der nicht für das Pumpen der Laser in den Sendern zu verwendenden Moden als auch für den gegebenenfalls das optische Element in der optischen Anordnung zur Anregung der Sender ausbildenden Resonator können in dem erfindungsgemäßen System sehr unterschiedliche Arten von Resonatoren zum Einsatz gelangen. Eine bevorzugte Möglichkeit besteht in der Verwendung von Ringresonatoren beziehungsweise mindestens eines Ringresonators für die Resonatoranordnung oder/und für die das Licht zur Anregung der Sender erzeugende optische Anordnung.

Darüber hinaus kommt die Verwendung des Prinzips der Interferenz nutzender Resonatoren (interferenzbasierter Resonatoren) in Betracht. Zu nennen sind hierbei insbesondere Fabry-Perot-Interferometer oder Resonatoren, welche an ihren Enden mit Lambda-Viertel-Plättchen ausgestattet sind. Ebenfalls möglich ist insoweit die Verwendung von Resonatoren, welche den Whispering Gallery Effect beziehungsweise Whispering Gallery Effekt, nämlich das Auftreten konstruktiver oder destruktiver Interferenzen in Kugeln, Hohlräumen oder an konkaven Oberflächen, oder welche das Prinzip des Chirped Bragg Grating nutzen. Das letztgenannte Prinzip beruht darauf, das Licht durch hintereinander gereihte Schichten zu führen, welche unterschiedliche Brechnungsindizes aufweisen, so dass an diesen Totalreflektionen und Interferenzen auftreten.

Sowohl hinsichtlich der Verwendung in der optischen Anordnung einerseits und in der Resonatoranordnung andererseits als auch im Hinblick auf die Realisierung der Resonatoranordnung mittels mindestens zweier Resonatoren, ist dabei bezüglich der Verwendung aller vorgenannter Resonatorarten eine ausschließliche Verwendung nur einer Resonatorart, aber auch die Verwendung verschiedener Resonatoren in ein und demselben System möglich.

Aus rein technischer Sicht könnte man noch an die Verwendung aktiver Elemente anstelle der bisher angesprochenen und bevorzugten passiven Elemente denken, also an eine Verwendung von Elementen mit erzeugendem Charakter wie beispielsweise Frequenzkammgeneratoren, Festkörperlaser, Halbleiterlaser oder andere Arten von Lasern mit einer Kavität. Aus wirtschaftlicher Sicht dürfte dies jedoch bei der praktischen Umsetzung der erfindungsgemäßen Lösung eher nicht in Betracht kommen.

Entsprechend einer möglichen Ausbildungsform des Systems besteht eine zur Umsetzung des Verfahrens verwendete Resonatoranordnung aus zwei miteinander verschränkt angeordneten Ringresonatoren. Das Ausfiltern nicht für das Pumpen der Laser in den Sendern zu verwendender Moden geschieht hierbei unter Nutzung des Vernier-Effekts. Die verschränkte Anordnung der Ringresonatoren ist dadurch gegeben, dass diese gleichzeitig gewissermaßen sowohl in Reihe als auch parallel zueinander angeordnet sind. Erläuterungen hierzu sollen nochmals im Rahmen eines Ausführungsbeispiels erfolgen.

Bei einer besonders bevorzugten Ausbildungsform des erfindungsgemäßen Systems sind, bezogen auf die Übertragungsrichtung der die Sender anregenden Lichtwellen, hintereinander ein Strahlteiler, die eigentliche, aus mindestens zwei Ringresonatoren bestehende Resonatoranordnung und ein Strahlkoppler angeordnet. Die mindestens zwei Ringresonatoren der Resonatoranordnung sind hierbei zueinander parallel angeordnet, wobei der Strahlteiler die Lichtwellen der optischen Anordnung in eine der Anzahl der Ringresonatoren der Resonatoranordnung entsprechende Anzahl von Strahlen aufteilt. Bei den vorgenannten mindesten zwei parallel zueinander angeordneten Ringresonatoren der Resonatoranordnung kann es sich gemäß einer Variante dieser Ausbildungsform auch um Doppelringresonatoren handeln, die jeweils aus zwei miteinander verschränkt verkoppelten, einfachen Ringresonatoren bestehen.

Nachfolgend sollen Aspekte der Erfindung anhand von Zeichnungen und Ausführungsbeispielen nochmals erläutert werden. Die Zeichnungen zeigen im Einzelnen:
- Fig. 1:: eine beispielhafte Ausbildungsform des erfindungsgemäßen Systems in einer schematischen Darstellung,
- Fig. 2:: ein Beispiel für ein durch die optische Anordnung gemäß Fig. 1 bereitgestelltes periodisches Spektrum vom Lichtwellen,
- Fig. 3:: das Prinzip des Ausfilterns ausgewählter Wellenlängen mittels zweier verschränkt angeordneter Ringresonatoren,
- Fig. 4:: eine Ausbildungsform einer zwischen der optischen Anordnung gemäß Fig. 1 und den mittels ihr angeregten Sendern angeordneten Resonatoranordnung,
- Fig. 5:: ein Spektrum von Lichtwellen als Ergebnis des Ausfilterns einzelner, durch die Anordnung gemäß Fig. 1 bereitgestellter Lichtwellen.

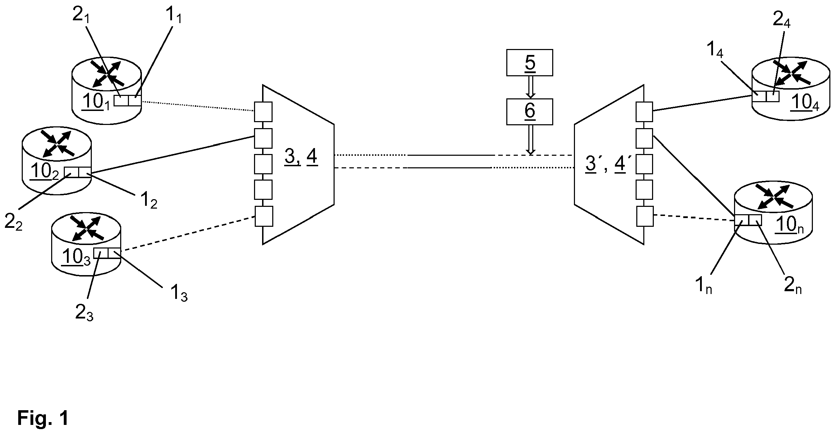

Die Fig. 1 zeigt eine schematische Darstellung eines gemäß der Erfindung gestalteten Systems zur optischen Datenübertragung. Das System besteht aus einer Mehrzahl optischer Sender 1₁ - 1ₙ, welche über Lichtwellenleiter und Multiplexer/Demultiplexer 3, 3' mit einer Mehrzahl optischer Empfänger 2₁ - 2ₙ in einem optischen Netzwerk verbunden sind. Die durch Laser realisierten optischen Sender 1₁ - 1ₙ und die optischen Empfänger 2₁ - 2ₙ sind als Bestandteile von Netzwerkelementen 10₁ - 10ₙ in Form von SFPs (Small Form-Factor Pluggables) ausgebildet. Im Hinblick auf den bidirektionalen Charakter des Netzwerks, wonach jedes SFP eines Netzwerkelements 10₁ - 10ₙ sowohl als Sender 1₁ - 1ₙ als auch als Empfänger 2₁ - 2ₙ fungieren kann, handelt es sich bei den in den Netzwerkelementen 10₁ - 10ₙ angeordneten SFPs um kompakte Einheiten zur elektrisch-optischen sowie zur optisch-elektrischen Wandlung, welche jeweils über einen Laser als Sender 1₁ - 1ₙ und über einen optischen Empfänger 2₁ - 2ₙ, wie beispielsweise eine Fotodiode, verfügen. Zwischen den Netzwerkelementen 10₁ - 10ₙ, also zwischen den Sendern 1₁ - 1ₙ und Empfängern 2₁ - 2ₙ, sind optische Multiplexer/Demultiplexer 3, 4, 3', 4' angeordnet. Bezogen auf die jeweilige Senderichtung werden dabei die mit den zu übertragenen Daten modulierten optischen Träger unterschiedlicher Frequenz beziehungsweise Wellenlänge durch einen optischen Multiplexer 3, '3 zu einem zwischen den Multiplexern/Demultiplexern 3, 4, 3', 4' übertragenen Signal gemultiplext, so dass die Signale über den betreffenden die Multiplexer/Demultiplexer 3, 4, 3', 4' miteinander verbindenden Lichtwellenleiter beziehungsweise den entsprechenden Abschnitt des optischen Netzwerks gemeinsam in unterschiedlichen Frequenzkanälen übertragen werden. Am Ende dieses Abschnitts werden die Signale der einzelnen Frequenzkanäle an einem Demultiplexer 4, 4' wieder voneinander getrennt.

Vorzugsweise im Bereich eines der Multiplexer/Demultiplexer 3, 4, 3', 4' ist als Bestandteil des optischen Netzwerks eine optische Anordnung 5 vorgesehen, welche ein periodisches Spektrum von hinsichtlich ihrer Wellenlängen zueinander äquidistanten Lichtwellen bereitstellt, durch welche die Laser, also die Sender 1₁ - 1ₙ, in den SFPs der Netzwerkelemente 10₁ - 10ₙ zur Aussendung von als Trägersignal dienenden Laserstrahlen mit untereinander verschiedenen Wellenlängen angeregt, die Laser der Sender 1₁ - 1ₙ also gepumpt werden. Die optische Anordnung 5, bei welcher es sich beispielsweise um einen breitbandigen Laser als Seeding Light und einen Ringresonator handelt, ist so konfiguriert, dass sie für jeden der zur Datenübertragung festgelegten Frequenzkanäle mindestens eine Lichtwelle beziehungsweise Mode mit einer innerhalb des jeweiligen Kanals gelegenen Wellenlänge bereitstellt. Hierbei wird das von der Lichtquelle beziehungsweise dem Seeding Light emittierte Licht mittels eines entsprechenden optischen Elements (zum Beispiel mittels eines Ringresonators) in ein Spektrum von Lichtwellen mit zueinander äquidistanten Wellenlängen aufgefächert. Diese Lichtwellen werden als eine Art Pilot-Frequenz entgegen zur Senderichtung der für die Datenübertragung genutzten Sender 1₁ - 1ₙ in das Netzwerk eingespeist und den jeweiligen, einen Oszillator darstellenden Lasern in den Sendern 1₁ - 1ₙ zugeführt, so dass die Laser der Sender 1₁ - 1ₙ unter Nutzung des Prinzips der Modenkopplung gepumpt werden.

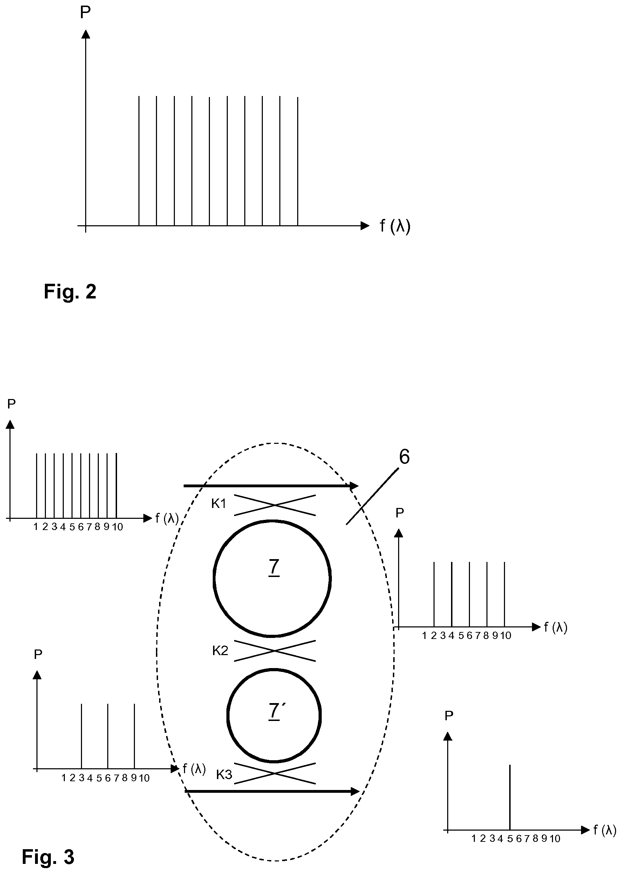

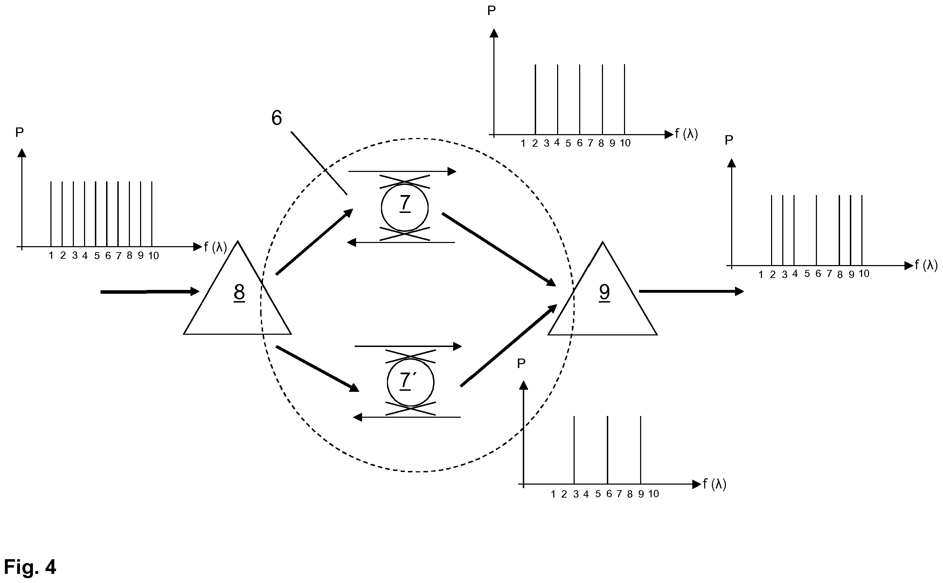

Zwischen der zuvor grundsätzlich beschriebenen optischen Anordnung 5 und den mit ihrer Hilfe gepumpten Lasern in den Sendern 1₁ - 1ₙ der SFPs der Netzwerkelemente 10₁ - 10ₙ ist erfindungsgemäß eine beispielsweise gemäß Fig. 3 oder Fig. 4 ausgebildete Resonatoranordnung 6 eingefügt, mit deren Hilfe einzelne Wellenlängen der durch die optische Anordnung 5 bereitgestellten Lichtwellen ausgefiltert werden, so dass diese nicht zur Anregung der Laser in den Sendern 1₁ - 1ₙ der SFPs beitragen. Auf diese Weise wird vermieden, dass ein ein Trägersignal innerhalb eines Frequenzbandes aussendender Laser des Senders 1₁ - 1ₙ eines SFPs zur Aussendung unterschiedlicher, zufällig wechselnder Eigenmoden angeregt wird.

In der Fig. 2 ist beispielhaft ein durch die das Seeding Light umfassende optische Anordnung 5 gemäß der Fig. 1 bereitgestelltes periodisches Lichtwellenspektrum mit hinsichtlich ihrer Wellenlängen zueinander äquidistanten Lichtwellen beziehungsweise Moden gezeigt. Ein solches Spektrum lässt sich beispielsweise mittels eines breitbandigen Lasers als Seeding Light erzeugen, welcher mit einem Resonator, vorzugsweise einem Ringresonator gekoppelt ist. Hierbei macht man es sich zunutze, dass mit Hilfe eines solchen Ringresonators aus dem breiten Spektrum des Seeding Lights nur Lichtwellen ausgekoppelt werden, welche die Bedingung L = n * λ erfüllen, wobei L = Länge des Ringresonators, λ = Wellenlänge und n eine ganze Zahl ist. Über die Beziehung c = λ * f (c = Lichtgeschwindigkeit und f = Frequenz) lässt sich dabei mit Hilfe des Ringresonators ein Spektrum von Lichtwellen mit zueinander äquidistanten Wellenlängen auskoppeln, welches derart ist, dass für jeden der zur Übertragung in dem optischen Netzwerk vorgesehenen Frequenzkanäle mindestens eine Wellenlänge bereitgestellt wird, welche den entsprechenden Laser respektive Sender 1₁ - 1ₙ im SFP nach dem Prinzip der Modenkopplung zum Aussenden einer als Trägersignal dienenden Laserstrahlung mit gleicher Wellenlänge anregt. Da die durch die optische Anordnung bereitgestellten Lichtwellen hinsichtlich ihrer Wellenlänge ausreichend dicht zueinander sein müssen, kann hierbei jedoch der Effekt eintreten, dass zumeist mehrere der Eigenmoden eines als Sender für einen der Übertragungskanäle dienenden Lasers angeregt werden und daher der betreffende Laser hinsichtlich der von ihm als Trägersignal abgegebenen Strahlung zufällig zwischen diesen verschiedenen Eigenmoden hin und her springt.

Um dies zu vermeiden, werden mittels einer Resonatoranordnung 6, für die beispielhafte Ausbildungsformen in Fig.3 und Fig. 4 schematisch gezeigt sind, einzelne der Lichtwellen, das heißt einzelne Moden, des von der optischen Anordnung bereitgestellten Lichtwellenspektrums ausgefiltert und nicht den Lasern in den SFPs zur Anregung zugeleitet.

Hierzu bedient sich die Erfindung beispielsweise des Prinzips der Superposition unter Nutzung des teilweise auch als "Zauneffekt" bekannten Vernier-Effekts in einer Resonatoranordnung 6 mit mindestens zwei miteinander verschränkt angeordneten Ringresonatoren 7,7'. Das hieraus resultierende Wirkprinzip ist durch die Fig. 3 schematisch beziehungsweise symbolisch veranschaulicht. Demnach trifft in der Resonatoranordnung 6 mit den zwei miteinander verschränkt, das heißt im Grunde gleichzeitig sowohl in Reihe als auch parallel angeordneten Ringresonatoren 7,7', welche in der Figur schematisch dargestellt ist, ein Lichtwellenspektrum mit Moden gemäß dem links oben in der Darstellung wiedergegebenen Diagramm ein. In dem Diagramm ist die Ausgangsleistung des von der (hier nicht gezeigten) optischen Anordnung 5 bereitgestellten Lichts über der Frequenz aufgetragen. Aus diesem Spektrum von Lichtwellen wird von dem ersten Ringresonator 7 aufgrund der Dimensionierung seiner Resonatorlänge nur jede zweite Mode ausgekoppelt (veranschaulicht durch das Diagramm rechts oben). Durch den anderen Ringresonator 7' wird hingegen aufgrund einer gegenüber dem ersten Ringresonator 7 verschiedenen Resonatorlänge (bezogen auf hinsichtlich der Wellenlänge benachbarte Lichtwellen) nur jede dritte Mode ausgekoppelt, was durch das Diagramm links unten veranschaulicht wird. Wird nun das von der optischen Anordnung 5 bereitgestellte Lichtwellenspektrum der Resonatoranordnung 6 mit den miteinander verschränkt angeordneten Ringresonatoren 7, 7' zugeführt; so wird im Ergebnis mittels der Resonatoranordnung 6 gemäß der Fig. 3 das in dem Diagramm rechts unten dargestellte Spektrum erhalten.

Das Wirken des Vernier-Effekts soll an dieser Stelle beispielhaft mit Hilfe eines willkürlichen, nicht zwingend der Realität entsprechenden Zahlenbeispiels nochmals veranschaulicht werden. Bei zwei gekoppelten (das heißt miteinander verschränkt angeordneten) Ringresonatoren 7, 7' mit angenommenen Resonatorlängen von 2cm und 3cm können aus dem ersten Ringresonator Lichtwellen mit Frequenzen ausgekoppelt werden, welche die Bedingung f₁ₙ = n * c / L₁ ∼ n * 15,9 GHz erfüllen und aus dem zweiten Ringresonator solche, die die Bedingung f₂ₘ= m * c/ L₂ ∼ m * 9,9 GHz erfüllen. Hierbei stehen f für die Frequenz, c für die Lichtgeschwindigkeit, L für die jeweilige Resonatorlänge sowie n und m für ganze Zahlen.
Die im Ergebnis der Passage beider Ringresonatoren auskoppelbaren, also gewissermaßen "überlebenden" Frequenzen müssen demnach gleichzeitig Vielfache der ersten wie der zweiten Basisfrequenz sein. Mathematisch lässt sich das umschreiben auf ganzzahlige Vielfache des kleinsten gemeinsamen Vielfachen (KgV) der Basisfrequenzen der Ringresonatoren 7, 7'. Im Obigen Beispiel wären das konkret fₖ = k * c / (KgV(L, L2). Gemäß dem gewählten Beispiel sind dies 7 [cm] und fₖ ∼ k * 30 GHz, wobei k wiederum für eine ganze Zahl steht.

Die Fig. 4 veranschaulicht eine weitere mögliche Ausbildungsform der erfindungsgemäß vorgesehenen Resonatoranordnung (6). Diese besteht hier aus einem Strahlteiler 8, einem Strahlkoppler 9 und der zwischen ihnen angeordneten eigentlichen Resonatoranordnung mit zwei Ringresonatoren 7, 7'. Demnach werden die von der optischen Anordnung 5 gemäß der Fig. 1 bereitgestellten Lichtwellen entsprechend dem in der Fig. 4 links gezeigten Diagramm zunächst dem Strahlteiler 8 zugeführt. Hier werden diese in zwei Strahlenbündel gleichen Spektrums (gemäß dem links gezeigten Diagramm) aufgeteilt. Die beiden Strahlenbündel werden voneinander unabhängig zwei zueinander parallel angeordneten Ringresonatoren 7, 7' mit zueinander unterschiedlicher Resonatorlänge zugeführt. Aus dem oberen Ringresonator 7 wird im Wege der Auskopplung aufgrund seiner Resonatorlänge das in dem oben (Mitte) in der Darstellung gezeigten Diagramm veranschaulichte Lichtwellenspektrum erhalten. Demgegenüber resultiert durch Auskopplung aus dem unteren Ringresonator 7' das in dem unteren Diagramm (Mitte) dargestellte Spektrum. Werden nun diese beiden Spektren in dem Strahlkoppler miteinander überlagert, so resultiert im Ergebnis hieraus das im Diagramm ganz rechts gezeigte Spektrum. Wie aus der Figur ersichtlich, sind gemäß dem in der Figur rechts gezeigten Diagramm aus dem ursprünglich, im Diagramm links gezeigten Lichtwellenspektrum von Moden mit ursprünglich zueinander äquidistanten Wellenlängen Lichtwellen beziehungsweise Moden mit einzelnen Wellenlängen ausgefiltert worden. Im Ergebnis wird demnach ein Spektrum erhalten, bei welchem ebenfalls sichergestellt ist, dass für jeden der zur Datenübertragung vorgesehenen Frequenzkanäle einer der Laser beziehungsweise Sender 1₁ - 1ₙ in den SFPs zur Aussendung eines Trägersignals angeregt wird, wobei jedoch vermieden wird, dass einzelne der Laser zufällig wechselnd mit unterschiedlichen Eigenmoden angeregt werden. Durch diese Maßnahme lässt sich das Prinzip des Verwendens eines breitbandigen Seeding Lights auch in Systemen zur optischen Datenübertragung einsetzen, mit welchen Datenübertragungsraten von 10 GBit/s oder höher in 40, 80 oder mehr Frequenzkanälen erreicht werden.

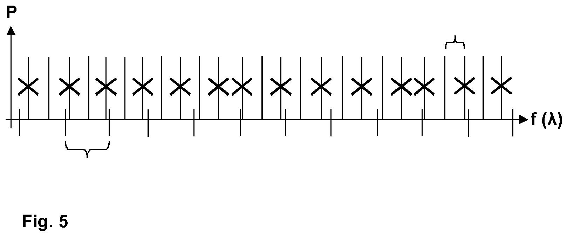

In der Fig. 5 ist nochmals veranschaulicht, wie mittels der Erfindung aus dem ursprünglichen Lichtwellenspektrum mit hinsichtlich ihrer Wellenlängen zueinander äquidistanten Moden gezielt einzelne Wellenlängen beziehungsweise Moden ausgekoppelt werden, so dass für jeden in dem Diagramm nach Fig. 5 eingetragenen Frequenzkanal (ein Frequenzkanal ist beispielhaft durch die breite geschweifte Klammer, links unten, kenntlich gemacht) genau eine Mode zur Anregung des zugehörigen Senders 1₁ - 1ₙ übrig bleibt. Die insoweit ausgefilterten Wellenlängen und die diesen entsprechenden Moden, welche nicht zur Anregung der Sender 1₁ - 1ₙ für die zu übertragenden Nutzdaten verwendet werden, sind in der Darstellung dadurch erkennbar, dass diese durchgekreuzt wurden. Der Abstand zwischen den Eigenmoden der in den SFPs als Sender verwendeten Laser ist durch die schmale geschweifte Klammer, rechts oben kenntlich gemacht.

### Liste der Bezugszeichen

- 1₁ - 1ₙ: Sender
- 2₁ - 2ₙ: Empfänger
- 3, 3': Modulator
- 4, 4': Demodulator
- 5: optische Anordnung
- 6: Resonatoranordnung
- 7, 7': Ringresonator
- 8: Strahlteiler
- 9: Strahlkoppler
- 10₁ - 10ₙ: Netzelement

## Patentansprüche

1. Verfahren zur optischen Datenübertragung, nach welchem Daten zwischen einer Mehrzahl von optischen Sendern (1₁ - 1ₙ) und optischen Empfängern (2₁ - 2ₙ) über Lichtwellenleiter und Multiplexer/Demultiplexer (3, 4, 3', 4') in einem optischen Netzwerk in unterschiedlichen Frequenzkanälen übertragen werden, wobei die Sender (1₁ - 1ₙ), welche mit den zu übertragenden Daten zu modulierendes Laserlicht als Trägersignal aussenden, mittels einer mindestens eine Lichtquelle umfassenden optischen Anordnung (5) durch Modenkopplung zur Aussendung von Trägersignalen mit untereinander sowie hinsichtlich ihrer Zuordnung zu den Frequenzkanälen verschiedenen Wellenlängen angeregt werden, indem durch die optische Anordnung (5) ein periodisches Lichtwellenspektrum von Moden mit zueinander äquidistanten Wellenlängen bereitgestellt und jeder Sender (1₁ - 1ₙ) durch eine andere der von der optischen Anordnung (5) bereitgestellten Moden des Lichtwellenspektrums gelocked, das heißt zur Aussendung von Laserlicht als Trägersignal angeregt wird, **dadurch gekennzeichnet, dass** Moden mit ausgewählten Wellenlängen des durch die optische Anordnung (5) bereitgestellten Lichtwellenspektrums nicht zur Anregung der Sender (1₁ - 1ₙ) verwendet werden, indem sie mit Hilfe einer Resonatoranordnung (6) aus diesem Lichtwellenspektrum ausgefiltert werden.

2. Verfahren nach Anspruch 1, **dadurch gekennzeichnet, dass** die Lichtwellen des durch die optische Anordnung (5) zur Anregung der Sender (1₁ - 1ₙ) bereitgestellten Lichtwellenspektrums zur Ausfilterung nicht zum Anregen der Laser von Sendern (1₁ - 1ₙ) zu verwendender Wellenlängen durch eine Resonatoranordnung (6) mit mindestens zwei, sich hinsichtlich ihrer Resonatorlänge und damit hinsichtlich der aus ihnen auskoppelbaren Wellenlängen unterscheidenden Resonatoren geführt werden.

3. Verfahren nach Anspruch 2, **dadurch gekennzeichnet, dass** die von der optischen Anordnung bereitgestellten Lichtwellen mittels eines Strahlteilers (8) auf mindestens zwei Ringresonatoren (7, 7') der Resonatoranordnung (6) aufgeteilt und die aus den mindestens zwei Ringresonatoren (7, 7') ausgekoppelten Lichtwellen zunächst einem Strahlkoppler (9) und dann den jeweils durch sie zur Aussendung eines Trägersignals anzuregenden Sendern (1₁ - 1ₙ) zugeführt werden.

4. Verfahren nach Anspruch 2 oder 3, **dadurch gekennzeichnet, dass** für die Resonatoranordnung (6) Resonatoren verwendet werden, deren Resonatorlängen zueinander paarweise teilerfremd sind.

5. System zur Durchführung des Verfahrens gemäß Anspruch 2, mit einer Mehrzahl als Laser ausgebildeter optischer Sender (1₁ - 1ₙ), welche in einem optischen Netzwerk über Lichtwellenleiter und Multiplexer/Demultiplexer (3, 3') mit einer Mehrzahl optischer Empfänger (2₁ - 2ₙ) verbunden sind, und mit einer in dem Netzwerk angeordneten, mindestens eine Lichtquelle umfassenden optischen Anordnung (5) zur Bereitstellung eines periodischen Lichtwellenspektrums mit hinsichtlich ihrer Wellenlängen zueinander äquidistanten Moden, wobei von der optischen Anordnung (5) bereitgestellte Lichtwellen entgegen zur Senderichtung der für die Datenübertragung genutzten Sender (1₁ - 1ₙ) in das Netzwerk eingespeist und den Sendern (1₁ - 1ₙ) zugeführt werden, um diese zur Aussendung als Trägersignal für Daten dienenden Laserlichts mit bezüglich der Sender (1₁ - 1ₙ) untereinander verschiedenen Wellenlängen anzuregen, **dadurch gekennzeichnet, dass** zwischen der optischen Anordnung (5) und den mittels von ihr bereitgestellter Lichtwellen anzuregenden Sendern (1₁ - 1ₙ) eine mindestens aus zwei Resonatoren mit voneinander verschiedener Resonatorlänge bestehende Resonatoranordnung (6) angeordnet ist.

6. System nach Anspruch 5, **dadurch gekennzeichnet, dass** die Resonatoranordnung (6) aus mindestens zwei Resonatoren mit zueinander paarweise teilerfremder Resonatorlänge besteht.

7. System nach Anspruch 5 oder 6, **dadurch gekennzeichnet, dass** die optische Anordnung (5) durch ein breitbandiges Seeding Light, nämlich einen breitbandigen Laser, und durch ein die Laserstrahlung dieses breitbandigen Lasers in eine Mehrzahl von Lichtwellen mit zueinander äquidistanten Wellenlängen auffächerndes optisches Element gebildet ist.

8. System nach Anspruch 7, **dadurch gekennzeichnet, dass** es sich bei dem die breitbandige Laserstrahlung in eine Mehrzahl von Lichtwellen mit zueinander äquidistanten Wellenlängen auffächernden optischen Element um einen Resonator handelt.

9. System nach Anspruch 5 oder 8, **dadurch gekennzeichnet, dass** es sich bei mindestens einem der das optische Element der optischen Anordnung (5) und/oder der die Resonatoranordnung (6) ausbildenden Resonatoren um einen Ringresonator handelt.

10. System nach Anspruch 5 oder 8, **dadurch gekennzeichnet, dass** mindestens einer der Resonatoren zur Ausbildung des optischen Elements der optischen Anordnung (5) und/oder innerhalb der Resonatoranordnung (6) durch einen interferenzbasierten Resonator ausgebildet ist, nämlich durch einen Resonator einer der folgenden Gruppen:
a.) Fabry-Perot-Interferometer,
b.) Resonatoren, welche an ihren Enden mit Lambda-Viertel-Plättchen ausgestattet sind,
c.) Resonatoren, welche den Whispering Gallery Effect nutzen,
d.) Resonatoren, in welchen mittels hintereinander gereihter, einen unterschiedlichen Brechungsindex aufweisender Schichten das Prinzip des Chirped Bragg Grating genutzt wird.

11. System nach Anspruch 5 oder 6, **dadurch gekennzeichnet, dass** zischen der optischen Anordnung (5) und den mittels von ihr bereitgestellter Lichtwellen anzuregenden Sendern (1₁ - 1ₙ) eine Resonatoranordnung (6) angeordnet ist, in welcher bezogen auf die Übertragungsrichtung der die Sender (1₁ - 1ₙ) anregenden Lichtwellen hintereinander ein Strahlteiler (8), mindestens zwei Ringresonatoren (7, 7') mit voneinander verschiedener Resonatorlänge und ein Strahlkoppler (9) angeordnet sind, wobei die mindestens zwei Ringresonatoren (7, 7') zueinander parallel angeordnet sind, wobei der Strahlteiler (8) die Lichtwellen der optischen Anordnung (5) in eine der Anzahl der Ringresonatoren (7, 7') entsprechende Anzahl, diesen Ringresonatoren (7, 7') zugeführter Strahlen teilt und wobei die aus den einzelnen Ringresonatoren (7, 7') der Resonatoranordnung (6) ausgekoppelten Lichtwellen, deren Wellenlänge jeweils einem Vielfachen der Resonatorlänge des Ringresonators (7, 7') entspricht, aus welchem sie ausgekoppelt werden, an dem Strahlkoppler (9) wieder zusammengeführt werden.

## Claims

1. Method for optical data transfer, according to which data is transferred on different frequency channels between a plurality of optical transmitters (1₁-1ₙ) and optical receivers (2₁-2ₙ) via optical waveguides and multiplexers/demultiplexers (3, 4, 3', 4') in an optical network, wherein the transmitters (1₁-1ₙ), which emit laser light to be modulated as a carrier signal together with the data to be transferred, are excited by way of mode coupling by means of an optical arrangement (5), which comprises at least one light source, to emit carrier signals with wavelengths that differ both among themselves and in respect of their assignment to the frequency channels by virtue of a periodic light-wave spectrum of modes with mutually equidistant wavelengths being provided by the optical arrangement (5) and each transmitter (1₁-1ₙ) being locked, i.e., excited to emit laser light as a carrier signal, by another mode of the light-wave spectrum provided by the optical arrangement (5), **characterized in that** modes with selected wavelengths of the light-wave spectrum provided by the optical arrangement (5) are not used for exciting the transmitters (1₁-1ₙ) by virtue of being filtered out of this light-wave spectrum with the aid of a resonator arrangement (6).

2. Method according to Claim 1, **characterized in that** the light waves of the light-wave spectrum provided by the optical arrangement (5) for exciting the transmitters (1₁-1ₙ) are guided through a resonator arrangement (6) comprising at least two resonators, which differ in terms of their resonator lengths and hence differ in terms of the wavelengths that are decouplable therefrom, for the purposes of filtering out wavelengths not to be used for exciting the lasers of transmitters (1₁-1ₙ).

3. Method according to Claim 2, **characterized in that** the light waves provided by the optical arrangement are split among at least two ring resonators (7, 7') of the resonator arrangement (6) by means of a beam splitter (8) and the light waves decoupled from the at least two ring resonators (7, 7') are fed first to a beam coupler (9) and then to the transmitters (1₁-1ₙ) that should be excited thereby, in each case for the purposes of emitting a carrier signal.

4. Method according to Claim 2 or 3, **characterized in that** resonators whose resonator lengths with respect to one another are pairwise coprime are used for the resonator arrangement (6).

5. System for carrying out the method according to Claim 2, comprising a plurality of optical transmitters (1₁-1ₙ) embodied as lasers, said optical transmitters being connected to a plurality of optical receivers (2₁-2ₙ) via optical waveguides and multiplexers/demultiplexers (3, 3') in an optical network, and comprising an optical arrangement (5) disposed in the network and comprising at least one light source, for providing a periodic light-wave spectrum with modes that are equidistant from one another in respect of their wavelengths, wherein light waves provided by the optical arrangement (5) are fed into the network counter to the transmitter direction of the transmitters (1₁-1ₙ) used for the data transfer and supplied to the transmitters (1₁-1ₙ) in order to excite these to emit laser light serving as a carrier signal for data, said laser light having mutually different wavelengths in respect of the transmitters (1₁-1ₙ), **characterized in that** a resonator arrangement (6) consisting of at least two resonators with mutually different resonator lengths is disposed between the optical arrangement (5) and the transmitters (1₁-1ₙ) to be excited by means of the light waves provided thereby.

6. System according to Claim 5, **characterized in that** the resonator arrangement (6) consists of at least two resonators whose resonator lengths with respect to one another are pairwise coprime.

7. System according to Claim 5 or 6, **characterized in that** the optical arrangement (5) is formed by a broadband seeding light, specifically a broadband laser, and by an optical element that fans the laser radiation of this broadband laser into a multiplicity of light waves with mutually equidistant wavelengths.

8. System according to Claim 7, **characterized in that** the optical element that fans the broadband laser radiation into a plurality of light waves with mutually equidistant wavelengths is a resonator.

9. System according to Claim 5 or 8, **characterized in that** the at least one resonator forming the optical element of the optical arrangement (5) and/or forming the resonator arrangement (6) is a ring resonator.

10. System according to Claim 5 or 8, **characterized in that** at least one of the resonators for forming the optical element of the optical arrangement (5) and/or within the resonator arrangement (6) is embodied by an interference-based resonator, specifically by a resonator of one of the following groups:
a) Fabry-Perot interferometers,
b) resonators equipped with lambda/4 plates at their ends,
c) resonators using the whispering gallery effect,
d) resonators in which the principle of the chirped Bragg grating is used by means of successively arranged layers having different refractive indices.

11. System according to Claim 5 or 6, **characterized in that** a resonator arrangement (6) is disposed between the optical arrangement (5) and the transmitters (1₁-1ₙ) to be excited by means of the light waves provided by said resonator arrangement, a beam splitter (8), at least two ring resonators (7, 7') with mutually different resonator lengths and a beam coupler (9) being successively disposed in said resonator in relation to the transmission direction of the light waves that excite the transmitters (1₁-1ₙ), wherein the at least two ring resonators (7, 7') are disposed parallel to one another, wherein the beam splitter (8) splits the light waves of the optical arrangement (5) into beams that are supplied to said ring resonators (7, 7'), the number of said beams corresponding to the number of ring resonators (7, 7'), and wherein light waves decoupled from the individual ring resonators (7, 7') of the resonator arrangement (6) are merged together again at the beam coupler (9), the wavelength of said light wavelengths in each case corresponding to a multiple of the resonator lengths of the ring resonator (7, 7') from which they are decoupled.

## Revendications

1. Procédé de transmission optique de données, selon lequel des données sont transmises entre une pluralité d'émetteurs optiques (1₁ - 1ₙ) et de récepteurs optiques (2₁ - 2ₙ) par l'intermédiaire de guides d'ondes optiques et de multiplexeurs/démultiplexeurs (3, 4, 3', 4') dans un réseau optique et dans différents canaux de fréquence,
dans lequel les émetteurs (1₁ - 1ₙ), qui émettent une lumière laser devant être modulée avec les données à transmettre sous la forme d'un signal porteur, sont excités au moyen d'un dispositif optique (5) comprenant au moins une source lumineuse par couplage de mode pour émettre des signaux porteurs présentant des longueurs d'onde différentes les unes des autres et en ce qui concerne leur attribution aux canaux de fréquence,
en faisant en sorte que le dispositif optique (5) fournisse un spectre d'ondes lumineuses périodique de modes présentant des longueurs d'onde mutuellement équidistantes et en ce que chaque émetteur (1₁ - 1ₙ) est verrouillé par un autre mode des modes du spectre d'ondes lumineuses fournis par le dispositif optique (5), c'est-à-dire qu'il est excité pour émettre une lumière laser en tant que signal porteur,
**caractérisé en ce que** des modes présentant des longueurs d'onde sélectionnées du spectre d'ondes lumineuses fourni par le dispositif optique (5) ne sont pas utilisés pour exciter les émetteurs (1₁ - 1ₙ) en raison du fait qu'ils sont éliminés dudit spectre d'ondes lumineuses par filtrage à l'aide d'un dispositif résonateur (6).

2. Procédé selon la revendication 1, **caractérisé en ce que** les ondes lumineuses du spectre d'ondes lumineuses qui est fourni par le dispositif optique (5) pour l'excitation des émetteurs (1₁ - 1ₙ) sont guidées par un dispositif résonateur (6) comportant au moins deux résonateurs qui diffèrent par leur longueur de résonateur et par conséquent par les longueurs d'onde pouvant être découplées de ceux-ci, pour extraire par filtration des longueurs d'onde à ne pas utiliser pour l'excitation des lasers des émetteurs (1₁ - 1ₙ).

3. Procédé selon la revendication 2, **caractérisé en ce que** les ondes lumineuses fournies par le dispositif optique sont divisées au moyen d'un diviseur de faisceau (8) vers au moins deux résonateurs en anneau (7, 7') du dispositif résonateur (6) et les ondes lumineuses découplées des au moins deux résonateurs en anneau (7, 7') sont d'abord envoyées à un coupleur de faisceaux (9) puis aux émetteurs (1₁ - 1ₙ) devant être respectivement excités par ceux-ci pour émettre un signal porteur.

4. Procédé selon la revendication 2 ou 3, **caractérisé en ce que** des résonateurs dont les longueurs de résonateur sont des nombres premiers par paires les uns par rapport aux autres sont utilisés pour le dispositif résonateur (6).

5. Système pour la mise en œuvre du procédé selon la revendication 2, comportant une pluralité d'émetteurs optiques (1₁ - 1ₙ) réalisés sous la forme de lasers, qui sont reliés en un réseau optique par l'intermédiaire de guides d'ondes optiques et de multiplexeurs/démultiplexeurs (3, 3') à plusieurs récepteurs optiques (2₁ - 2ₙ), et comportant un dispositif optique (5) disposé dans le réseau et comprenant au moins une source lumineuse pour fournir un spectre périodique d'ondes lumineuses comportant des modes qui sont équidistants les uns des autres en longueur d'onde, dans lequel des ondes lumineuses fournies par le dispositif optique (5) sont injectées dans le réseau dans la direction opposée à la direction d'émission des émetteurs (1₁ - 1ₙ) utilisés pour la transmission de données et sont délivrées aux émetteurs (1₁ - 1ₙ) afin d'exciter ces derniers pour qu'ils émettent en tant que signal porteur une lumière laser servant aux données à des longueurs d'onde différentes les unes des autres par rapport aux émetteurs (1₁ - 1ₙ), **caractérisé en ce qu'**il est prévu, entre le dispositif optique (5) et les émetteurs (1₁ - 1ₙ) à exciter au moyen d'ondes lumineuses fournies par ledit dispositif optique, un dispositif résonateur (6) constitué d'au moins deux résonateurs de longueurs de résonateur différentes.

6. Système selon la revendication 5, **caractérisé en ce que** le dispositif résonateur (6) est constitué d'au moins deux résonateurs présentant des longueurs de résonateur qui sont des nombres premiers par paires les uns par rapport aux autres.

7. Système selon la revendication 5 ou 6, **caractérisé en ce que** le dispositif optique (5) est constitué par une lumière d'ensemencement à large bande, à savoir un laser à large bande, et par un élément optique qui disperse le rayonnement laser dudit laser à large bande en une pluralité d'ondes lumineuses présentant des longueurs d'onde équidistantes les unes des autres.

8. Système selon la revendication 7, **caractérisé en ce que** l'élément optique qui disperse le rayonnement laser à large bande en une pluralité d'ondes lumineuses présentant des longueurs d'onde équidistantes les unes des autres est un résonateur.

9. Système selon la revendication 5 ou 8, **caractérisé en ce qu'**au moins l'un des résonateurs constituant l'élément optique du dispositif optique (5) et/ou des résonateurs constituant le dispositif résonateur (6) est un résonateur en anneau.

10. Système selon la revendication 5 ou 8, **caractérisé en ce qu'**au moins l'un des résonateurs est conçu pour réaliser l'élément optique du dispositif optique (5) et/ou est réalisé à l'intérieur du dispositif résonateur (6) au moyen d'un résonateur à base d'interférence, à savoir d'un résonateur appartenant à l'un des groupes suivants :
a) des interféromètres de Fabry-Perot,
b) des résonateurs équipés de lames quart d'onde à leurs extrémités,
c) des résonateurs utilisant l'effet Whispering Gallery,
d) des résonateurs dans lesquels le principe du réseau de Bragg à période variable est utilisé au moyen de couches successives présentant des indices de réfraction différents.

11. Système selon la revendication 5 ou 6, **caractérisé en ce qu'**il est prévu, entre le dispositif optique (5) et les émetteurs (1₁ - 1ₙ) devant être excités au moyen d'ondes lumineuses fournies par le dispositif optique, un dispositif résonateur (6) dans lequel un diviseur de faisceau (8), au moins deux résonateurs en anneau (7, 7') de longueurs différentes et un coupleur de faisceaux (9) sont disposés les uns derrière les autres par rapport à la direction de transmission des ondes lumineuses excitant les émetteurs (1₁ - 1ₙ), dans lequel les au moins deux résonateurs en anneau (7, 7') sont disposés parallèlement l'un à l'autre, dans lequel le diviseur de faisceau (8) divise les ondes lumineuses du dispositif optique (5) en un nombre de faisceaux délivrés auxdits résonateurs en anneau (7, 7') qui correspond au nombre de résonateurs en anneau (7, 7') et dans lequel les ondes lumineuses découplées des résonateurs en anneau (7, 7') individuels du dispositif résonateur (6) et dont la longueur d'onde correspond respectivement à un multiple de la longueur de résonateur du résonateur en anneau (7, 7') duquel elles sont découplées, sont recombinées au niveau du coupleur de faisceaux (9).
